# EUROPÄISCHE PATENTANMELDUNG

(11) **EP 3 709 475 A1**
(43) Veröffentlichungstag der Anmeldung: **16.09.2020**
(21) Anmeldenummer: 20156781.5
(22) Anmeldetag: 12.02.2020
(51) Int. Cl.: H02J 7/00

(54) **HALTEELEMENT FÜR EINEN AKKUMULATOR SOWIE AKKUMULATOR MIT EINEM DERARTIGEN HALTEELEMENT**

(30) Priorität: 15.03.2019 DE 102019203541
(71) Anmelder: Robert Bosch GmbH, 70442 Stuttgart (DE)
(72) Erfinder: Mehlo, Dennis, 72762 Reutlingen (DE); Koeder, Thilo, 70839 Gerlingen (DE); Schnizer, Lukas, 72764 Reutlingen (DE); Bayer, Lisa, 70563 Stuttgart (DE)

(57) **Zusammenfassung**

Die Erfindung betrifft eine Batterieeinheit zum Betrieb an einem Bordnetz eines Kraftfahrzeugs, umfassend ein Batteriemodul zur Erzeugung einer Ausgangsspannung, welche zwischen einem positiven Pol und einem negativen Pol anliegt, und ein Steuerelement, welches einen Gleichspannungswandler zur Erzeugung einer Sensorspannung umfasst, die zwischen einem Zusatzkontakt und dem negativen Pol anliegt. In der Batterieeinheit ist eine erste Kennlinie (K1) abgelegt, welche die Ausgangsspannung in Abhängigkeit von einem Ladezustand des Batteriemoduls beschreibt. In der Batterieeinheit ist eine zweite Kennlinie (K2) abgelegt, welche eine Bezugsspannung einer Bezugsbatterie in Abhängigkeit von einem Ladezustand der Bezugsbatterie beschreibt, wobei die Bezugsspannung mindestens über einen Teilbereich des Ladezustandes der Bezugsbatterie geringer ist als die Ausgangsspannung bei dem gleichen Ladezustand des Batteriemoduls. Der Gleichspannungswandler erzeugt die Sensorspannung derart, dass in dem besagten Teilbereich des Ladezustandes die Sensorspannung kleiner als die Ausgangsspannung und größer als oder gleich der Bezugsspannung bei dem gleichen Ladezustand ist. Die Erfindung betrifft auch ein Verfahren zum Betrieb einer erfindungsgemäßen Batterieeinheit an einem Bordnetz eines Kraftfahrzeugs.

## Beschreibung

Die Erfindung betrifft eine Batterieeinheit zur Verwendung an einem Bordnetz eines Kraftfahrzeugs, umfassend ein Batteriemodul zur Erzeugung einer Ausgangsspannung, welche zwischen einem positiven Pol und einem negativen Pol anliegt, und ein Steuerelement, welches einen Gleichspannungswandler zur Erzeugung einer Sensorspannung umfasst, die zwischen einem Zusatzkontakt und dem negativen Pol anliegt. Die Erfindung betrifft auch ein Verfahren zum Betrieb einer erfindungsgemäßen Batterieeinheit an einem Bordnetz eines Kraftfahrzeugs.

### Stand der Technik

In konventionellen Kraftfahrzeugen mit Verbrennungsmotor werden in der Regel Blei-Säure-Batterien als Energiespeicher in einem 12V-Bordnetz eingesetzt. Eine solche Blei-Säure-Batterie, welche einen positiven Pol und einen negativen Pol aufweist, dient unter anderem als Starterbatterie zum Starten des Verbrennungsmotors. Das Bordnetz und dessen Funktionalitäten sind auf die Eigenschaften der Blei-Säure-Batterie, beispielsweise Innenwiderstand, Lade-Entladekennlinie sowie Leerlaufspannung, abgestimmt.

Wichtig ist hierbei eine korrekte Erkennung des Zustands der Blei-Säure-Batterie in dem Kraftfahrzeug. Der Zustand, insbesondere der Ladezustand, der Blei-Säure-Batterie wird von dem Kraftfahrzeug als Basis für Funktionen eines Energiemanagements genutzt und kann daher das Fahrzeugverhalten sowie die Verfügbarkeit bei einer fehlerhaften Erkennung massiv negativ beeinflussen. Auch sicherheitsrelevante Funktionalitäten des Kraftfahrzeugs können davon betroffen sein.

Typischerweise übernimmt ein Batteriesensor, welcher an den negativen Pol und an den positiven Pol der Blei-Säure Batterie angeschlossen ist, die Erkennung des Zustands der Blei-Säure-Batterie. Der Batteriesensor misst dabei unter anderem einen durch die Blei-Säure-Batterie fließenden Strom sowie eine an den Polen der Blei-Säure-Batterie anliegende Spannung. Aus den gemessenen Werten ermittelt der Batteriesensor insbesondere den Ladezustand und die Alterung der Blei-Säure Batterie.

Bei Ausfall einer Blei-Säure Batterie kann es vorteilhaft sein, diese durch eine Lithium-Ionen-Batterie zu ersetzen. Eine Lithium-Ionen-Batterie weist jedoch aufgrund der unterschiedlichen Technologie andere Eigenschaften auf als eine Blei-Säure-Batterie. Hierzu zählen unter anderem ein niedrigerer Innenwiderstand und insbesondere ein anderer Zusammenhang zwischen Ladezustand und Ausgangsspannung. Beispielsweise wäre ein von dem in dem Kraftfahrzeug vorhandenen Batteriesensor ermittelter Ladezustand somit fehlerhaft.

Eine Lithium-Ionen-Batterie müsste demnach bei einem Austausch nicht nur die konventionelle Blei-Säure-Batterie sondern auch den Batteriesensor und dessen Funktionalität ersetzen. Aufgrund einer hohen Variantenanzahl der am Markt befindlichen Kraftfahrzeuge, sowie Blei-Säure-Batterie und Batteriesensoren scheint dies nicht praktikabel. Es ist wünschenswert, insbesondere bei Ausfall einer Blei-Säure Batterie in einem Kraftfahrzeug diese durch eine Batterieeinheit zu ersetzen, welche ein Batteriemodul mit Lithium-Ionen-Batteriezellen aufweist. Dabei sollte der bereits in dem Kraftfahrzeug vorhandene Batteriesensor auch weiterverwendet werden.

Aus dem Dokument DE 10 2016 222 320 A1 ist eine gattungsgemäße Batterieeinheit zur Verwendung an einem Bordnetz eines Kraftfahrzeugs bekannt. Die Batterieeinheit umfasst ein Batteriemodul und ein Steuerelement, welches mit einem Batteriesensor verbindbar ist. Das Steuerelement umfasst einen Gleichspannungswandler, welcher in Abhängigkeit von einer ersten Spannung an dem positiven Pol der Batterieeinheit eine zweite Spannung zur Versorgung des Batteriesensors generiert. Die Batterieeinheit dient dabei insbesondere zum Ersatz einer ausgefallenen Blei-Säure Batterie als Starterbatterie für einen Verbrennungsmotor des Kraftfahrzeugs.

Dokument DE 11 2014 000 836 T5 betrifft eine Ladezustandsschätzvorrichtung und ein Ladezustandsschätzverfahren. Die Vorrichtung zum Schätzen des Ladezustands der Batterie umfasst eine Spannungsmesseinheit, eine Strommesseinheit, eine Ladeschätzeinheit, eine Übergangsschätzeinheit und eine Entladeschätzeinheit. Beim Schätzen des Ladezustands der Batterie werden Kennlinien verwendet, welche durch ein Experiment oder eine Simulation erhalten werden können.

Das Dokument DE 10 2014 226 190 A1 beschreibt eine Testvorrichtung zur Überprüfung eines Batterie-Steuergerätes oder zur Überprüfung einer Batterie. Die Testvorrichtung umfasst einen Batteriesimulator zur Simulation einer Spannung mindestens einer Zelle einer simulierten Batterie zur Vorgabe an das Batterie-Steuergerät.

### Offenbarung der Erfindung

Es wird eine Batterieeinheit zum Betrieb an einem Bordnetz eines Kraftfahrzeugs vorgeschlagen. Die Batterieeinheit umfasst ein Batteriemodul zur Erzeugung einer Ausgangsspannung, welche zwischen einem positiven Pol und einem negativen Pol anliegt, und ein Steuerelement, welches einen Gleichspannungswandler zur Erzeugung einer Sensorspannung umfasst. Die Sensorspannung liegt dabei zwischen einem Zusatzkontakt und dem negativen Pol an. Die Batterieeinheit dient insbesondere zum Ersatz einer ausgefallenen Blei-Säure Batterie als Starterbatterie für einen Verbrennungsmotor des Kraftfahrzeugs.

Erfindungsgemäß ist in der Batterieeinheit eine erste Kennlinie abgelegt, welche die Ausgangsspannung in Abhängigkeit von einem Ladezustand des Batteriemoduls beschreibt. Ebenso ist in der Batterieeinheit eine zweite Kennlinie abgelegt, welche eine Bezugsspannung einer Bezugsbatterie in Abhängigkeit von einem Ladezustand der Bezugsbatterie beschreibt. Die Batterieeinheit, insbesondere das Steuerelement, umfasst dazu beispielsweise einen Speicherbereich, welcher zur Speicherung der besagten Kennlinien vorgesehenen ist.

Dabei ist die Bezugsspannung mindestens über einen Teilbereich des Ladezustandes der Bezugsbatterie geringer als die Ausgangsspannung bei dem gleichen Ladezustand des Batteriemoduls. Der Gleichspannungswandler des Steuerelements erzeugt die Sensorspannung derart, dass in dem besagten Teilbereich des Ladezustandes die Sensorspannung stets kleiner als die Ausgangsspannung und stets größer als oder gleich der Bezugsspannung bei dem gleichen Ladezustand ist.

Das Steuerelement erfasst die Ausgangsspannung und ermittelt daraus anhand der ersten Kennlinie den Ladezustand des Batteriemoduls. Der Gleichspannungswandler des Steuerelements erzeugt die Sensorspannung anhand des ermittelten Ladezustandes.

Der Gleichspannungswandler generiert insbesondere keine konstante Sensorspannung zur Versorgung eines Verbrauchers. Die Sensorspannung, die im Betrieb der Batterieeinheit an einem Batteriesensor anliegt, ist von dem Ladezustand des Batteriemoduls abhängig und dient somit dem Batteriesensor als Maß für den Ladezustand. Der Gleichspannungswandler kann unter anderem als elektronisch regelbarer DC/DC-Wandler oder als ohmscher Spannungsteiler oder als ein fester ohmscher Widerstand oder als ein regelbarer ohmscher Widerstand ausgestaltet sein. Beim Durchfließen des regelbaren ohmschen Widerstandes erzeugt der Versorgungsstrom einen Spannungsabfall. Durch Regeln des Wertes des ohmschen Widerstandes ist dieser Spannungsabfall gezielt und in verhältnismäßig kurzer Zeit einstellbar. Der Widerstand setzt lediglich den Wert der Spannung herab. Somit bleibt die ursprüngliche Dynamik der Spannung inhärent erhalten. Durch Regeln des Wertes des ohmschen Widerstandes kann somit die Sensorspannung beliebig generiert werden, sofern die Sensorspannung kleiner ist als Ausgangsspannung.

Damit wird dem Batteriesensor, an dem die Sensorspannung anliegt, ein Ladezustand des Batteriemoduls simuliert, welcher höher ist als der reale Ladezustand des Batteriemoduls.

Gemäß einer bevorzugten Ausführungsform der Erfindung weist das Batteriemodul mehrere Batteriezellen auf, welche als Lithium-Ionen-Zellen ausgeführt sind. Die erste Kennlinie beschreibt also die Abhängigkeit der Ausgangsspannung einer Lithium-Ionen-Batterie von dem Ladezustand der Lithium-Ionen-Batterie. Bevorzugt weist die Bezugsbatterie Blei-Säure-Batteriezellen auf. Das bedeutet, die zweite Kennlinie beschreibt die Abhängigkeit der Bezugsspannung einer Blei-Säure-Batterie von dem Ladezustand der Blei-Säure-Batterie.

Lithium-Ionen-Zellen weisen im Vergleich zu Blei-Säure-Batteriezellen insbesondere eine verlängerte Lebensdauer, eine verbesserte Zyklenfestigkeit, eine höhere Energiedichte und auch eine höhere Leistungsdichte auf. Die Art der Batteriezellen ist dabei nicht auf Lithium-Ionen-Zellen limitiert. Grundsätzlich sind alle Arten von Sekundärzellen geeignet, welche verbesserte Eigenschaften als Blei-Säure-Batteriezellen aufweisen. Beispielsweise eignen sich Lithium-Schwefel-Zellen, Lithium-Luft-Zellen, Superkondensatoren (Supercaps, SC), Lithium-Kondensatoren sowie Batteriezellen mit Festkörperelektrolyten.

Gemäß einer bevorzugten Weiterbildung der Erfindung umfasst die Batterieeinheit ferner einen Batteriesensor, welcher derart mit dem negativen Pol und mit dem Zusatzkontakt elektrisch verbunden ist, dass die Sensorspannung an dem Batteriesensor anliegt.

Es wird auch ein Verfahren zum Betrieb einer erfindungsgemäßen Batterieeinheit an einem Bordnetz eines Kraftfahrzeugs vorgeschlagen. Die Batterieeinheit ist dabei in das Kraftfahrzeug eingebaut, und der positive Pol der Batterieeinheit ist mit dem Bordnetz des Kraftfahrzeugs verbunden. Dabei wird die Sensorspannung derart erzeugt, dass in dem besagten Teilbereich des Ladezustandes die Sensorspannung kleiner als die Ausgangsspannung und größer als oder gleich der Bezugsspannung bei dem gleichen Ladezustand ist.

Gemäß einer bevorzugten Ausgestaltung der Erfindung ist dabei ein Batteriesensor derart mit dem negativen Pol und mit dem Zusatzkontakt elektrisch verbunden, dass die Sensorspannung an dem Batteriesensor anliegt.

Damit wird dem Batteriesensor, an dem die Sensorspannung anliegt, ein Ladezustand des Batteriemoduls simuliert, welcher höher ist als der reale Ladezustand des Batteriemoduls.

Vorzugsweise erstreckt der besagte Teilbereich des Ladezustandes sich zwischen 10 % und 100 % einer maximalen Ladekapazität des Batteriemoduls sowie zwischen 10 % und 100 % einer maximalen Ladekapazität der Bezugsbatterie.

Bei einem Ladezustand von 100 % der maximalen Ladekapazität der Bezugsbatterie wird in der Regel ein Generator abgeschaltet und somit die Bezugsbatterie nicht mehr geladen. Auf diese Art wird eine Überladung der Bezugsbatterie verhindert.

Gemäß einer vorteilhaften Ausgestaltung der Erfindung ist die Sensorspannung bei einem Ladezustand von 100 % einer maximalen Ladekapazität des Batteriemoduls gleich der Bezugsspannung bei einem Ladezustand von 100 % einer maximalen Ladekapazität der Bezugsbatterie. Damit wird das Batteriemodul bei einem Ladezustand von 100 % der maximalen Ladekapazität des Batteriemoduls nicht mehr geladen und eine Überladung des Batteriemoduls wird verhindert.

Gemäß einer anderen vorteilhaften Ausgestaltung der Erfindung ist die Sensorspannung bei einem Ladezustand von 100 % einer maximalen Ladekapazität des Batteriemoduls größer als die Bezugsspannung bei einem Ladezustand von 100 % einer maximalen Ladekapazität der Bezugsbatterie. Damit wird das Batteriemodul bereits bei einem Ladezustand von weniger als 100 %, beispielsweise von 80 % oder 90 %, der maximalen Ladekapazität des Batteriemoduls nicht mehr geladen und eine Überladung des Batteriemoduls wird verhindert.

Bei einem Ladezustand von beispielsweise 70 % der maximalen Ladekapazität der Bezugsbatterie, insbesondere einer Blei-Säure-Batterie, werden in der Regel Komfortfunktionen abgeschaltet. Zu solchen Komfortfunktionen gehören beispielsweise eine Start-Stopp-Automatik des Kraftfahrzeugs oder ein Betrieb von Zusatzausstattung eines Campingfahrzeugs.

Gemäß einer weiteren vorteilhaften Ausgestaltung der Erfindung ist die Sensorspannung bei einem Ladezustand zwischen 10 % und 30 % einer maximalen Ladekapazität des Batteriemoduls gleich der Bezugsspannung bei einem Ladezustand zwischen 60 % und 80 % einer maximalen Ladekapazität der Bezugsbatterie. Damit sind die besagten Komfortfunktionen des Kraftfahrzeugs bis zu einem Ladezustand des Batteriemoduls zwischen 10 % und 30 % der maximalen Ladekapazität des Batteriemoduls nutzbar.

Gemäß einer bevorzugten Ausgestaltung der Erfindung ist eine Abhängigkeit der Sensorspannung von einem Ladezustand des Batteriemoduls linear.

Gemäß einer vorteilhaften Weiterbildung der Erfindung wird eine Abhängigkeit der Sensorspannung von einem Ladezustand des Batteriemoduls extern vorgegeben. Diese Vorgabe geschieht beispielsweise über eine Taste, über eine drahtlose Schnittstelle, zum Beispiel Bluetooth, DECT, Wireless LAN, oder über eine kabelgebundene Schnittstelle, zum Beispiel CAN, LIN, Flexray, Ethernet, seriell, analog.

Eine erfindungsgemäße Batterieeinheit sowie ein erfindungsgemäßes Verfahren finden vorteilhaft Verwendung an einem Bordnetz eines Kraftfahrzeugs, insbesondere eines Kraftfahrzeugs mit einem Verbrennungsmotor und insbesondere zum Ersatz einer konventionellen Blei-Säure-Batterie. Aber auch andere Verwendungen, beispielsweise an Bordnetzen anderer Kraftfahrzeuge wie beispielsweise Hybrid-Fahrzeugen, Plug-In-Hybridfahrzeugen sowie Elektrofahrzeugen sind denkbar.

### Vorteile der Erfindung

Die Erfindung ermöglicht einen Austausch einer konventionellen 12V Blei-Säure-Batterie durch eine 12V Lithium-Ionen-Batterie bei Sicherstellung aller Funktionalitäten, insbesondere des Energiemanagements, in dem Kraftfahrzeug. Ein in dem Kraftfahrzeug vorhandener Batteriesensor, welcher auf die Eigenschaften der ausgetauschten Blei-Säure-Batterie abgestimmt ist, kann beibehalten werden und ist somit Teil der neu eingesetzten Batterieeinheit. Das Steuerelement mit dem Gleichspannungswandler ermöglicht somit den Einsatz einer Lithium-Ionen-Batterie in Kraftfahrzeugen, die auf die Eigenschaften einer Blei-Säure-Batterie abgestimmt sind.

Durch die vorgesehene Festlegung der Sensorspannung wird dem Batteriesensor ein Ladezustand des Batteriemoduls simuliert, welcher höher ist als der reale Ladezustand des Batteriemoduls. Durch eine geeignete Festlegung der Sensorspannung kann insbesondere eine Nutzung von Komfortfunktionen bis zu einem geringeren Ladezustand des Batteriemoduls ermöglicht werden. Ebenso kann ein Ladezustand des Batteriemoduls, bei dem das Batteriemodul nicht mehr geladen wird um eine Überladung des Batteriemoduls zu verhindern, flexibel festgelegt werden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Batterieeinheit gemäß einer ersten Ausführungsform an einem Bordnetz eines Kraftfahrzeugs,
- Figur 2: eine schematische Darstellung einer Batterieeinheit gemäß einer zweiten Ausführungsform an einem Bordnetz eines Kraftfahrzeugs und
- Figur 3: eine graphische Darstellung der Abhängigkeiten von Ladezuständen und Spannungen.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

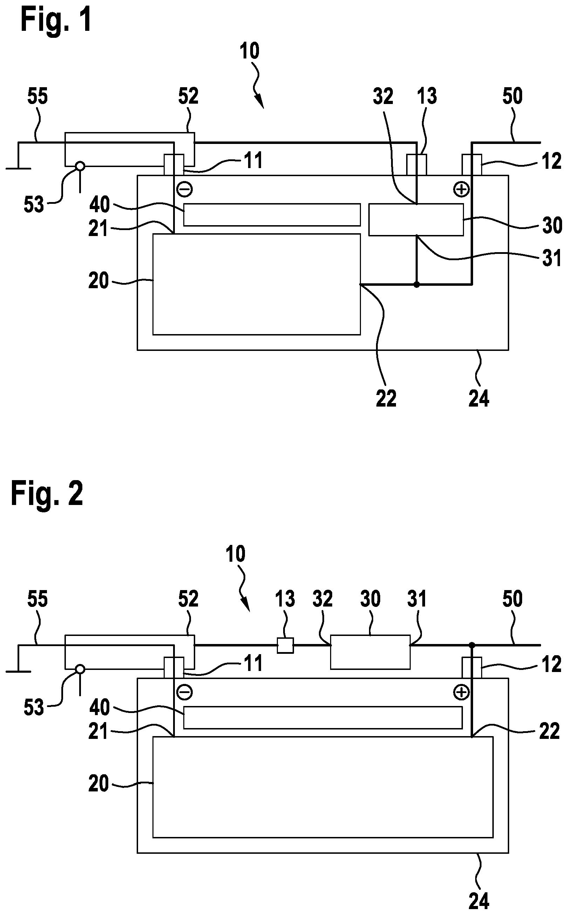

Figur 1 zeigt eine schematische Darstellung einer Batterieeinheit 10 gemäß einer ersten Ausführungsform an einem Bordnetz 50 eines hier nicht dargestellten Kraftfahrzeugs. Als Bordnetz 50 werden in diesem Zusammenhang die spannungsführenden Versorgungsleitungen in dem Kraftfahrzeug bezeichnet. Das Bordnetz 50 weist vorliegend eine Nominalspannung von 12 Volt gegenüber einer Masseleitung 55 in dem Kraftfahrzeug auf. Die Batterieeinheit 10 weist einen Batteriesensor 52 auf.

Die Batterieeinheit 10 umfasst einen positiven Pol 12, welcher mit dem Bordnetz 50 verbunden ist. Die Batterieeinheit 10 umfasst auch einen negativen Pol 11, welcher mit dem Batteriesensor 52 verbunden ist. Der Batteriesensor 52 ist auch mit der Masseleitung 55 verbunden. Ferner ist der Batteriesensor 52 mittels einer Kommunikationsschnittstelle 53 mit einem übergeordneten Fahrzeugsteuergerät verbunden.

Die Batterieeinheit 10 umfasst ein Batteriemodul 20, welches mehrere Batteriezellen aufweist, welche als Lithium-Ionen-Zellen ausgeführt sind. Die Batteriezellen sind beispielsweise in Serie geschaltet und liefern eine Nominalspannung von 12 Volt. Das Batteriemodul 20 weist ein negatives Terminal 21 und ein positives Terminal 22 auf. Zwischen den Terminals 21, 22 des Batteriemoduls 20 liegt die von den besagten Batteriezellen gelieferte Nominalspannung von 12 Volt an.

Das Batteriemodul 20 ist in einem Gehäuse 24 angeordnet. Der negative Pol 11 und der positive Pol 12 ragen aus dem Gehäuse 24 heraus. Das negative Terminal 21 ist elektrisch mit dem negativen Pol 11 verbunden und das positive Terminal 22 ist elektrisch mit dem positiven Pol 12 verbunden. Somit liegt zwischen den Polen 11, 12 ebenfalls die von den Batteriezellen des Batteriemoduls 20 gelieferte Nominalspannung von 12 Volt an. Die Batterieeinheit 10 umfasst auch ein Batteriemanagementsystem 40 zur Überwachung und Regelung des Batteriemoduls 20. Das besagte Batteriemanagementsystem 40 befindet sich vorliegend ebenfalls innerhalb des Gehäuses 24.

Die Batterieeinheit 10 umfasst ferner ein Steuerelement 30. Das Steuerelement 30 befindet sich vorliegend ebenfalls in dem Gehäuse 24. Das Steuerelement 30 weist einen ersten Anschluss 31 auf, welcher mit dem positiven Pol 12 elektrisch verbunden ist. Das Steuerelement 30 weist auch einen zweiten Anschluss 32 auf, welcher mit einem Zusatzkontakt 13 elektrisch verbunden ist. Der Zusatzkontakt 13 ist vorliegend an dem Gehäuse 24 befestigt. Der Batteriesensor 52, der sich vorliegend außerhalb des Gehäuses 24 befindet, ist mit einem Zusatzkontakt 13 elektrisch verbunden.

An dem ersten Anschluss 31 des Steuerelements 30 liegt die von dem Batteriemodul 20 gelieferte Nominalspannung von 12 Volt an, welche im Folgenden als Ausgangsspannung bezeichnet wird. Die Ausgangsspannung liegt somit zwischen dem positiven Pol 12 und dem negativen Pol 11 an. An dem zweiten Anschluss 32 des Steuerelements 30 liegt eine Sensorspannung an, welche von dem Steuerelement 30 erzeugt wird. Die Sensorspannung liegt somit zwischen dem Zusatzkontakt 13 und dem negativen Pol 11 an. Die Sensorspannung liegt damit auch an dem Batteriesensor 52 an.

Dazu umfasst das Steuerelement 30 einen Gleichspannungswandler, welcher die Sensorspannung an dem zweiten Anschluss 32 erzeugt. Bei dem Gleichspannungswandler kann es sich beispielsweise um einen regelbaren DC/DC-Wandler handeln. Der Gleichspannungswandler kann auch als regelbarer ohmscher Spannungsteiler ausgestaltet sein.

Der Batteriesensor 52 misst unter anderem die Sensorspannung, welche von der Ausgangsspannung abweicht. Aus der gemessenen Sensorspannung ermittelt der Batteriesensor 52 einen Ladezustand des Batteriemoduls 20 und gegebenenfalls weiter Zustandsgrößen. Der Batteriesensor 52 überträgt den ermittelten Ladezustand des Batteriemoduls 20 über die Kommunikationsschnittstelle 53 zu dem übergeordneten Fahrzeugsteuergerät.

Figur 2 zeigt eine schematische Darstellung einer Batterieeinheit 10 gemäß einer zweiten Ausführungsform an einem Bordnetz 50 eines Kraftfahrzeugs. Die Batterieeinheit 10 gemäß der zweiten Ausführungsform gleicht weitgehend der in Figur 1 gezeigten Batterieeinheit 10 gemäß der ersten Ausführungsform. Im Unterschied zu der in Figur 1 gezeigten Batterieeinheit 10 befindet sich das Steuerelement 30 vorliegend außerhalb des Gehäuses 24, in welchem das Batteriemodul 20 angeordnet ist. Der Zusatzkontakt 13 ist ebenfalls außerhalb des Gehäuses 24 angeordnet.

Gemäß einer weiteren, hier nicht dargestellten Ausführungsform kann das Steuerelement 30 in das Batteriemanagementsystem 40 zur Überwachung und Regelung des Batteriemoduls 20 integriert sein. Das Steuerelement 30 und das Batteriemanagementsystem 40 bilden in diesem Fall eine Einheit, welche vorzugsweise innerhalb des Gehäuses 24 angeordnet ist, in welchem auch das Batteriemodul 20 angeordnet ist.

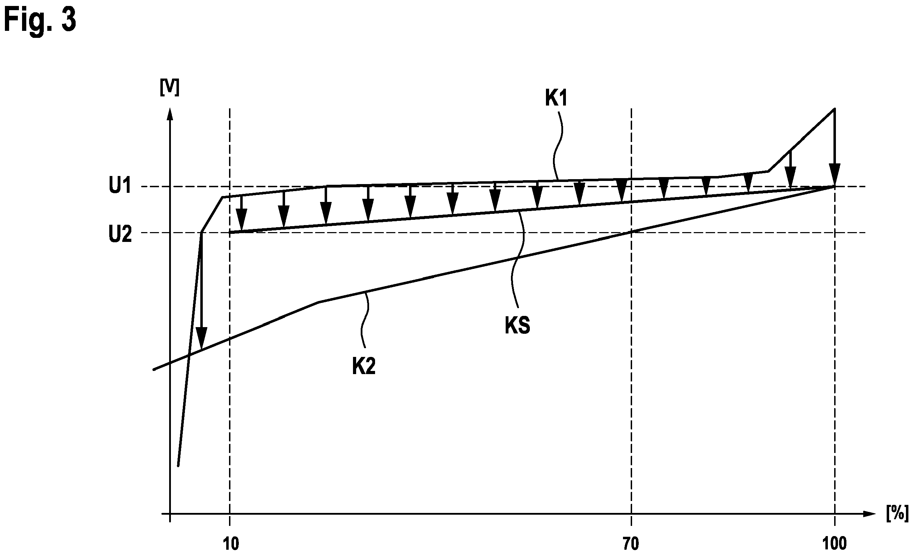

Figur 3 zeigt eine graphische Darstellung der Abhängigkeiten von Ladezuständen und Spannungen. Auf der Abszisse ist dabei der Ladezustand des Batteriemoduls 20 sowie einer Bezugsbatterie in Prozent angegeben. Auf der Ordinate ist die Spannung in Volt angegeben. Bei der Bezugsbatterie handelt es sich beispielsweise um eine konventionelle 12V Blei-Säure-Batterie.

In Figur 3 ist eine erste Kennlinie K1 dargestellt, welche die Ausgangsspannung des Batteriemoduls 20 in Abhängigkeit von einem Ladezustand des Batteriemoduls 20 beschreibt. In Figur 3 ist auch eine zweite Kennlinie K2 dargestellt, welche eine Bezugsspannung der Bezugsbatterie in Abhängigkeit von einem Ladezustand der Bezugsbatterie beschreibt. In Figur 3 ist auch eine Steuerkennlinie KS dargestellt, welche die Sensorspannung, die von dem Steuerelement 30 erzeugt wird, in Abhängigkeit von einem Ladezustand des Batteriemoduls 20 beschreibt.

Ein Wert der Bezugsspannung bei einem Ladezustand der Bezugsbatterie von 100 % einer maximalen Ladekapazität der Bezugsbatterie wird als erste Grenzspannung U1 bezeichnet. Wenn der Ladezustand der Bezugsbatterie 100 % der maximalen Ladekapazität beträgt darf die Bezugsbatterie nicht weiter geladen werden. Ein Wert der Bezugsspannung bei einem Ladezustand der Bezugsbatterie von vorliegend 70 % der maximalen Ladekapazität der Bezugsbatterie wird als zweite Grenzspannung U2 bezeichnet. Wenn der Ladezustand der Bezugsbatterie 70 % der maximalen Ladekapazität beträgt werden Komfortfunktionen abgeschaltet.

Die Bezugsspannung ist über einen Teilbereich des Ladezustandes der Bezugsbatterie geringer als die Ausgangsspannung bei dem gleichen Ladezustand des Batteriemoduls 20. Dieser Teilbereich des Ladezustandes erstreckt sich vorliegend mindestens zwischen 10 % und 100 % der maximalen Ladekapazität des Batteriemoduls 20 sowie zwischen 10 % und 100 % der maximalen Ladekapazität der Bezugsbatterie.

Die Sensorspannung ist in dem besagten Teilbereich des Ladezustandes stets kleiner als die Ausgangsspannung und stets größer als oder gleich der Bezugsspannung bei dem gleichen Ladezustand.

Die Sensorspannung ist bei einem Ladezustand von 100 % der maximalen Ladekapazität des Batteriemoduls 20 gleich der Bezugsspannung bei einem Ladezustand von 100 % der maximalen Ladekapazität der Bezugsbatterie, also gleich der ersten Grenzspannung U1. Damit wird das Batteriemodul 20 bei einem Ladezustand von 100 % der maximalen Ladekapazität des Batteriemoduls 20 nicht mehr geladen und eine Überladung des Batteriemoduls 20 wird verhindert.

Die Sensorspannung ist bei einem Ladezustand von 10 % der maximalen Ladekapazität des Batteriemoduls 20 gleich der Bezugsspannung bei einem Ladezustand von 70 % der maximalen Ladekapazität der Bezugsbatterie, also gleich der zweiten Grenzspannung U2. Damit sind die Komfortfunktionen des Kraftfahrzeugs bei einem geringeren Ladezustand des Batteriemoduls 20 als 10 % der maximalen Ladekapazität des Batteriemoduls 20 nicht mehr nutzbar.

Das Steuerelement 30 erfasst die Ausgangsspannung und ermittelt daraus anhand der ersten Kennlinie K1 den Ladezustand des Batteriemoduls 20. Der Gleichspannungswandler des Steuerelements 30 erzeugt die Sensorspannung anhand des ermittelten Ladezustandes gemäß der Steuerkennlinie KS.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batterieeinheit (10) zum Betrieb an einem Bordnetz (50) eines Kraftfahrzeugs, umfassend
ein Batteriemodul (20) zur Erzeugung einer Ausgangsspannung, welche zwischen einem positiven Pol (12) und einem negativen Pol (11) anliegt, und ein Steuerelement (30), welches einen Gleichspannungswandler zur Erzeugung einer Sensorspannung umfasst, die zwischen einem Zusatzkontakt (13) und dem negativen Pol (11) anliegt,
**dadurch gekennzeichnet, dass**
in der Batterieeinheit (10) eine erste Kennlinie (K1) abgelegt ist, welche die Ausgangsspannung in Abhängigkeit von einem Ladezustand des Batteriemoduls (20) beschreibt, und dass
in der Batterieeinheit (10) eine zweite Kennlinie (K2) abgelegt ist, welche eine Bezugsspannung einer Bezugsbatterie in Abhängigkeit von einem Ladezustand der Bezugsbatterie beschreibt, wobei
die Bezugsspannung mindestens über einen Teilbereich des Ladezustandes der Bezugsbatterie geringer ist als die Ausgangsspannung bei dem gleichen Ladezustand des Batteriemoduls (20), und dass
der Gleichspannungswandler die Sensorspannung derart erzeugt, dass in dem besagten Teilbereich des Ladezustandes die Sensorspannung kleiner als die Ausgangsspannung und größer als oder gleich der Bezugsspannung bei dem gleichen Ladezustand ist.

2. Batterieeinheit (10) nach Anspruch 1, **dadurch gekennzeichnet, dass**
das Batteriemodul (20) mehrere Batteriezellen aufweist, welche als Lithium-Ionen-Zellen ausgeführt sind und/oder dass
die Bezugsbatterie Blei-Säure-Batteriezellen aufweist.

3. Batterieeinheit (10) nach einem der vorstehenden Ansprüche,
ferner umfassend einen Batteriesensor (52), welcher derart mit dem negativen Pol (11) und mit dem Zusatzkontakt (13) elektrisch verbunden ist, dass die Sensorspannung an dem Batteriesensor (52) anliegt.

4. Verfahren zum Betrieb einer Batterieeinheit (10) nach einem der Ansprüche 1 bis 3 an einem Bordnetz (50) eines Kraftfahrzeugs,
**dadurch gekennzeichnet, dass**
die Sensorspannung derart erzeugt wird, dass in dem besagten Teilbereich des Ladezustandes die Sensorspannung kleiner als die Ausgangsspannung und größer als oder gleich der Bezugsspannung bei dem gleichen Ladezustand ist.

5. Verfahren nach Anspruch 4, **dadurch gekennzeichnet, dass**
ein Batteriesensor (52) derart mit dem negativen Pol (11) und mit dem Zusatzkontakt (13) elektrisch verbunden ist, dass die Sensorspannung an dem Batteriesensor (52) anliegt.

6. Verfahren nach einem der Ansprüche 4 bis 5, **dadurch gekennzeichnet, dass** der besagte Teilbereich des Ladezustandes sich zwischen 10 % und 100 % einer maximalen Ladekapazität des Batteriemoduls (20) sowie zwischen 10 % und 100 % einer maximalen Ladekapazität der Bezugsbatterie erstreckt.

7. Verfahren nach einem der Ansprüche 4 bis 6, **dadurch gekennzeichnet, dass** die Sensorspannung bei einem Ladezustand von 100 % einer maximalen Ladekapazität des Batteriemoduls (20) gleich der Bezugsspannung bei einem Ladezustand von 100 % einer maximalen Ladekapazität der Bezugsbatterie ist.

8. Verfahren nach einem der Ansprüche 4 bis 6, **dadurch gekennzeichnet, dass** die Sensorspannung bei einem Ladezustand von 100 % einer maximalen Ladekapazität des Batteriemoduls (20) größer als die Bezugsspannung bei einem Ladezustand von 100 % einer maximalen Ladekapazität der Bezugsbatterie ist.

9. Verfahren nach einem der Ansprüche 4 bis 8, **dadurch gekennzeichnet, dass** die Sensorspannung bei einem Ladezustand zwischen 10 % und 30 % einer maximalen Ladekapazität des Batteriemoduls (20) gleich der Bezugsspannung bei einem Ladezustand zwischen 60 % und 80 % einer maximalen Ladekapazität der Bezugsbatterie ist.

10. Verfahren nach einem der Ansprüche 4 bis 9, **dadurch gekennzeichnet, dass** eine Abhängigkeit der Sensorspannung von einem Ladezustand des Batteriemoduls (20) linear ist.

11. Verfahren nach einem der Ansprüche 4 bis 10, **dadurch gekennzeichnet, dass** eine Abhängigkeit der Sensorspannung von einem Ladezustand des Batteriemoduls (20) extern vorgegeben wird.

12. Verwendung einer Batterieeinheit (10) nach einem der Ansprüche 1 bis 3 und/oder des Verfahrens nach einem der Ansprüche 4 bis 11 an einem Bordnetz (50) eines Kraftfahrzeugs, insbesondere eines Kraftfahrzeugs mit Verbrennungsmotor.
